Europäisches Patentamt

European Patent Office

Office européen des brevets

(11) Veröffentlichungsnummer: **0 170 794**
**B1**

(12) **EUROPÄISCHE PATENTSCHRIFT**

(45) Veröffentlichungstag der Patentschrift:
11.10.89

(51) Int. Cl.⁴: **B 60 G 17/04**, B 62 D 61/12,
B 60 G 17/00

(21) Anmeldenummer: 85105616.8

(22) Anmeldetag: 08.05.85

(54) Luftfedereinrichtung für Fahrzeuge.

(30) Priorität: 04.08.84 DE 3428867

(43) Veröffentlichungstag der Anmeldung:
12.02.86 Patentblatt 86/07

(45) Bekanntmachung des Hinweises auf die Patenterteilung: 11.10.89 Patentblatt 89/41

(84) Benannte Vertragsstaaten:
AT DE FR GB IT NL SE

(56) Entgegenhaltungen:
DE–A– 2 026 547
DE–A– 2 056 635
DE–A– 2 343 744
DE–A– 2 425 880
DE–A– 2 436 058
DE–A– 2 740 264
FR–A– 2 115 201
FR–A– 2 115 230
GB–A– 2 081 655
W. RIBBENS et al.: "Understanding Automotive Electronics", 1984, Seiten 34-37,99,100, Texas Instruments, Dallas, Texas;

(73) Patentinhaber: WABCO Westinghouse Fahrzeugbremsen GmbH
Am Lindener Hafen 21 Postfach 91 12 80
D-3000 Hannover 91 (DE)

(72) Erfinder: Geiger, Hartmut
Kochslandweg 21
D-3008 Garbsen 1 (DE)
Erfinder: Broll, Henryk
Höpfnerstrasse 2
D-3000 Hannover 91 (DE)

(74) Vertreter: Schrödter, Manfred
WABCO Westinghouse Fahrzeugbremsen GmbH Am
Lindener Hafen 21 Postfach 91 12 80
D-3000 Hannover 91 (DE)

Anmerkung: Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Luftfedereinrichtung für Fahrzeuge mit wenigstens einer Treibachse und wenigstens einer Schleppachse, vorzugsweise mit Tandemachsen mit Niveauregelung und Regelung der Achsbelastung und mit einer Einrichtung zum Anheben der Schleppachse gemäß dem Oberbegriff des Patentanspruchs.

Eine solche Einrichtung wird verwendet, um das Ladegewicht eines Fahrzeuges so auf seine Achsen zu verteilen, daß eine Überladung der Antriebsachse bei Einhaltung des zulässigen Gesamtgewichts der Tandemachsen verhindert wird, und daß bei unterschiedlichem Ladegewicht der Abstand der Fahrzeugzelle von den Achsen bzw. von der Fahrbahn auf gleichem Niveau gehalten wird.

Eine Einrichtung der eingangs genannten Art ist durch die DE-B-20 56 636 bekannt. Diese bekannte Einrichtung besteht im wesentlichen aus folgenden Teilen.

Ein mit Tandemachsen ausgerüstetes Fahrzeug hat eine Treibachse und eine Schleppachse, die über Luftfedern mit der Fahrzeugzelle verbunden sind. Die Einrichtung hat Niveauregelventile, die den Abstand der Fahrzeugzelle zu der Treibachse messen und bei Beladung oder Entladung die Luftfedern entweder mit dem Druckluftsystem des Fahrzeuges oder mit der Atmosphäre verbinden.

Die Luftverteilung während der Be- und Entlüftung der Luftfedern erfolgt über Ventile, die zwischen dem Niveauregelventil und den · Luftfedern der Tandemachsen angeordnet sind.

Den Luftfedern der Treibachse ist je eine Ventilkombination, bestehend aus einem Druckbegrenzungsventil und einem Überströmventil mit Rückströmung in Parallelschaltung zugeordnet. Den Luftfedern der Schleppachse ist je ein 3/2-Wege-Magnetventil zugeordnet, über das jeder Tragbalg der Schleppachse entweder mit dem Luftfederventil oder mit der Atmosphäre verbunden werden kann. Die Schleppachse verfügt weiterhin über eine Hebeluftfeder, die über ein 3/2-Wege-Magnetventil mit der Atmosphäre oder mit der Druckmittelquelle verbunden werden kann. Alle Magnetventile werden von einer elektrischen Schalteinrichtung gesteuert, die aus einem den Balgdruck der Treibachse messenden Druckschalter, einem Umschalter im fahrerhaus und einem Relais, vorzugsweise mit integrierter Zeitverzögerung besteht.

Mit dem Umschalter kann die Schleppachse unterhalb eines über den Druckschalter eingestellten Grenzdruckes der Luftfedern der Treibachse jederzeit gehoben werden, indem die Luftfedern der Schleppachse mit der Atmosphäre und die Hebeluftfeder mit der Druckmittelquelle verbunden werden, oder gesenkt werden, indem die Luftfedern der Schleppachse mit den Luftfederventilen und die Hebeluftfeder mit der Atmosphäre verbunden werden.

Die elektrische Schalteinrichtung ist so ausgebildet, daß die angehobene Schleppachse automatisch abgesenkt wird, wenn der Druck in den Luftfedern der Treibachse den vorgegebenen Grenzwert erreicht oder überschritten hat und der Druckschalter somit umgeschaltet hat. Das automatische Absenken der Schleppachse erfolgt nicht sofort, sondern erst nach einer Schaltverzögerung.

Hierdurch soll vermieden werden, daß fahrdynamische Einflüsse, die ein kurzfristiges Übersteigen des vorgegebenen maximalen Druckes in den Luftfedern der Treibachse zur Folge haben könnten, zu einem ungewollten Absenken der Schleppachse während der Fahrt führen würden.

Die vorbekannte Erfindung hat den Nachteil, daß über die vorerwähnte Schaltverzögerung hinausgehende dynamisch bedingte Drucküberhöhungen in den Luftfedern der Treibachse während der Fahrt, z. B. bei länger anhaltender Kurvenfahrt, ein ungewolltes Absenken der Schleppachse nicht verhindert werden kann.

Ein weiterer Nachteil besteht darin, daß während des Beladens des Fahrzeuges bei Stillstand ein erwünschtes Absenken der Schleppachse auch erst nach der vorerwähnten Schaltverzögerung erfolgt. Während dieser Schaltverzögerung ist daher eine Überlastung der Treibachse möglich, wenn z. B. daß Fahrzeug mit einem beladenen Container belastet wird.

Der Erfindung liegt die Aufgabe zugrunde, die Einrichtung der eingangs genannten Art so zu verbessern, daß ein Absenken der Schleppachse mit Sicherheit nur bei Stillstand bzw. bei einer noch meßbaren minimalen Fahrgeschwindigkeit des Fahrzeuges erfolgt und das Absenken infolge Erreichens oder Überschreitens der vorgegebenen maximalen Belastung der Treibachse verzögerungsfrei erfolgt.

Diese Aufgabe wird durch die im Patentanspruch angegebene Erfindung gelöst.

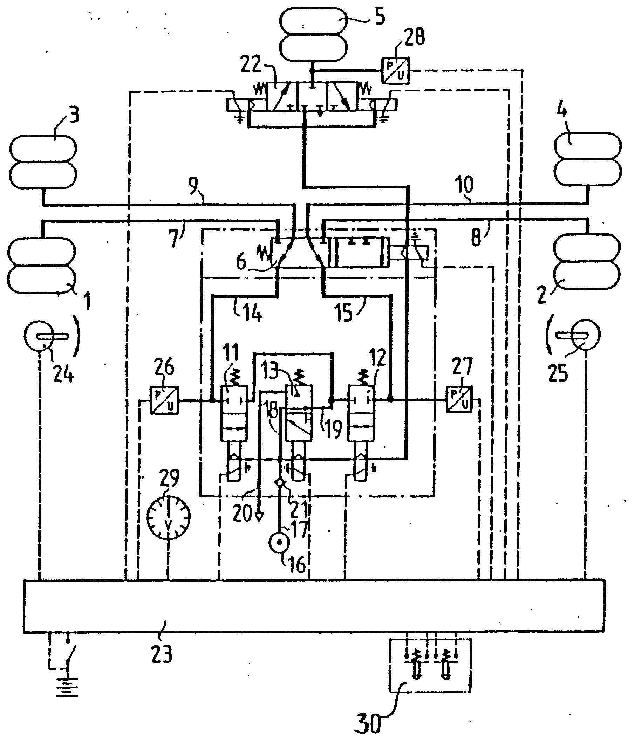

Die Erfindung wird anhand eines Ausführungsbeispiels eines elektro-pneumatisch gesteuerten Luftfedersystems für Tandemachsen, das in der Zeichnung dargestellt ist, näher erläutert.

Die Zeichnung zeigt eine Luftfedereinrichtung für ein Fahrzeug mit einer Treibachse und einer anhebbaren Schleppachse.

Die Zeichnung zeigt Luftfedern (1) und (2) einer ersten Achse, die eine Treibachse ist und Luftfedern (3) und (4) einer zweiten Achse, die eine Schleppachse ist, sowie eine Hebeluftfeder (5). Die Luftfedern (1, 2 sowie 3, 4) sind über Druckleitungen (7, 8, 9 und 10) mit einem Ventil (6) verbunden. Das Ventil (6) verbindet in einer ersten Schaltstellung die Luftfedern (3 und 4) der Schleppachse über Druckleitungen (9 und 14 sowie 10 und 15) mit einer Ventilkombination, bestehend aus zwei gleichartigen nach Art eines Absperrventils gestalteten Ventilen (11 und 12). Das Ventil (6) verbindet in einer zweiten Schaltstellung die Luftfedern (1 und 2) der Treibachse über die Druckleitungen (7, 14 sowie 8, 15) mit den Ventilen (11 und 12).

Über eine Druckleitung (19) sind die Ventile (11 und 12) mit einem Ventil (13) verbunden, das über eine Leitung (18) und eine Leitung (17) an eine Druckmittelquelle (16) angeschlossen ist. Das Ventil (13) verbindet in einer ersten Schaltstellung die Druckmittelquelle (16) über die Druckleitungen (17, 18 und 19) mit den Ventilen (11 und 12). In einer zweiten Schaltstellung verbindet das Ventil (13) die Druckleitung (19) über eine Leitung (20) mit der Atmosphäre. Ein in der Leitung (17) angeordnetes Rückschlagventil (21) sichert das Luftfedersystem gegen das Druckluftsystem des Fahrzeuges ab.

Die Hebeluftfeder (5) ist über eine Ventileinrichtung, die ein Ventil (22) umfaßt, mit der Druckmittelquelle (16) verbindbar. Das nach Art eines Wegeventils gestaltete Ventil (22) hat drei Schaltstellungen. In einer ersten Schaltstellung, die zugleich die Grundstellung ist, ist die Hebeluftfeder (5) gegen die Druckmittelquelle (16) und gegen die Atmosphäre abgesperrt. In einer zweiten Schaltstellung ist die Hebeluftfeder (5) mit der Druckmittelquelle (16) verbunden. In einer dritten Schaltstellung ist die Hebeluftfeder (5) mit der Atmosphäre verbunden.

Die Ventile (6, 11, 12 und 13) sind federbelastete, druckmittelsteuerbare Wegeventile mit je einem pneumatischen Steueranschluß, der durch einen Vorsteuermagneten betätigbar ist. Das Ventil (22) ist ein druckmittelsteuerbares Wegeventil mit zwei pneumatischen Steueranschlüssen, die durch Vorsteuermagnete betätigbar sind. Die Vorsteuermagnete aller Ventile sind über elektrische Leitungen mit einer elektrischen Schalteinrichtung in der Art einer Elektronik (23) verbunden. Anstelle der vorgesteuerten Magnetventile können auch direkt gesteuerte Magnetventile verwendet werden.

Mit einer Meßeinrichtung (29) in der Art eines Tachometers kann die Fahrgeschwindigkeit des Fahrzeuges gemessen und über eine elektrische Leitung einer Elektronik (23) mitgeteilt werden.

In einem Speicher der Elektronik (23) sind Sollwerte der Luftfedereinrichtung gespeichert, wie z. B. der Abstand der Fahrzeugzelle von der Achse und Luftdrücke in den Luftfedern und der Hebeluftfeder. Eine Vergleichseinrichtung der Elektronik (23) vergleicht die Sollwerte mit den Istwerten und gibt bei Abweichungen über elektrische Leitungen Schaltimpulse an die Vorsteuermagnete der an einem Steuervorgang beteiligten Ventile.

Die Elektronik (23) ist mit einer manuell betätigbaren, elektrischen Schalterkombination (30) zum Heben und Senken der Schleppachse verbunden.

Die Wirkungsweise der Luftfedereinrichtung ist wie folgt.

Beim Beladen senkt sich unter zunehmender Last die Fahrzeugzelle. Die Wegmeßeinrichtung (24 und 25) melden der Elektronik (23) eine Verringerung des Abstandes zwischen der Fahrzeugzelle und der Achse, wodurch ein Steuervorgang ausgelöst wird, der einen vorgegebenen Normalabstand zwischen der Fahrzeugzelle und der Achse wieder herstellt.

Das ventil (6) ist in der in der Zeichnung dargestellten Grundstellung, in der die Drücke der Luftfedern (3 und 4) der Schleppachse über die Druckmeßeinrichtungen (26 und 27) in die Elektronik (23) eingegeben sind. Der Vorsteuermagnet (6) gibt, von der Elektronik gesteuert, die Luftzufuhr zum Steueranschluß des Ventils (6) frei, worauf das Ventil (6) in Arbeitsstellung schaltet. Dadurch werden die Drücke der Luftfedern (1 und 2) der Treibachse von den Druckmeßeinrichtungen (26 und 27) der Elektronik (23) mitgeteilt. Liegen die Drücke unterhalb eines maximal zulässigen Druckes, werden die Ventile (11 und 12) durch die von der Elektronik gesteuerten Vorsteuermagnete in ihre Arbeitsstellung gebracht. Durch die beschriebenen Schaltvorgänge der Ventile (6, 11 und 12) sind die Luftfedern (1 und 2) über die Leitungen (7, 14 und 8, 15, 19, 18 und 17) mit der Druckmittelquelle (16) verbunden. Die Luftfedern (1 und 2) werden solange mit Luft aufgefüllt, bis die Druckmeßeinrichtungen (26 und 27) der Elektronik (23) melden, daß der zulässige Maximaldruck erreicht ist.

Es wird vorausgesetzt, daß zu Beginn des Beladens die Luftfedern (3 und 4) bis auf einen minimalen Restdruck entleert sind und die Hebeluftfeder (5) so gefüllt ist, daß sich die Schleppachse in der angehobenen Position befindet. Bei Erreichen des Maximaldruckes in den Luftfedern (1 und 2) schaltet die Elektronik (23) über Vorsteuermagnete das Ventil (22) automatisch in eine Schaltstellung, in der die Hebeluftfeder (5) mit der Atmosphäre verbunden ist. Beim Entweichen von Luft aus der Hebluftfeder (5) in die Atmosphäre wird die Schleppachse in die Fahrstellung gesenkt. Eine Schleppachse, die angehoben und abgesenkt werden kann, wird auch als Liftachse bezeichnet. Gleichzeitig wird das Ventil (6), von der Elektronik (23) angesteuert, in die Grundstellung geschaltet. Dadurch wird die Luftzufuhr zu den Luftfedern (1 und 2) auf eine Luftzufuhr zu den Luftfedern (3 und 4) umgeschaltet. Die Luftfedern (3 und 4) werden solange mit Luft gefüllt, bis die Wegmeßeinrichtungen (24 und 25) der Elektronik (23) melden, daß sich die Fahrzeugzelle um einen vorgegebenen Wegschritt angehoben hat. Die Ventile (11 und 12) schalten daraufhin in die Grundstellung zurück, so daß die Verbindung des Luftfedersystems mit der Druckquelle (16) unterbrochen ist.

Die Druckmeßeinrichtungen (26 und 27) messen jetzt über das in Arbeitsstellung geschaltete Ventil (6) die statischen Drücke in den Luftfedern (1 und 2). Durch das Wirksamwerden der Luftfedern (3 und 4) der Schleppachse können die Drücke in den Luftfedern (1 und 2) der Treibachse, durch Entlastung der Treibachse, unter den maximal zulässigen Druck sinken. Die Luftfedern (1 und 2) werden dann solange belüftet, bis der zulässige Maximaldruck erreich ist. Dies wird in zwischengeschalteten statischen Prüfphasen ermittelt. Danach werden wieder die Luftfedern (3 und 4) belüftet. Dieser Vorgang wird im Wechselspiel solange wiederholt, bis die vorgegebene Normalhöhe erreicht ist.

Beim Absenken der Schleppachse, d. h. bei Entlüftung der Hebeluftfeder (5) in die Atmosphäre, wird der Druckabfall von der Druckmeßeinrichtung (28) der Electronik vermittelt. Bei Erreichen eines konstruktiv bedingten zulässigen Restdruckes in der Hebeluftfeder (5) schaltet die Elektronik (23) das Ventil (22) in die neutrale Grundstellung, wodurch ein weiteres Entlüften in die Atmosphäre verhindert wird. Bei einer Änderung des Druckes in der Hebeluftfeder, z. B. durch Leckage oder durch Änderung der Länge der Hebluftfeder (5), sorgt die Elektronik, von der Druckmeßeinrichtung (28) gesteuert, automatisch dafür, daß der gewünschte Druck in der Hebeluftfeder (5) aufrechterhalten wird.

Beim Entladen hebt sich durch Minderung der Last die Fahrzeugzelle. Die Wegmeßeinrichtungen (24 und 25) melden der Elektronik (23) eine Vergrößerung des Abstandes zwischen der Fahrzeugzelle und der Achse. Vorausgesetzt, daß in den Luftfedern (3 und/oder 4) ein Druck herrscht, der größer als der vorgegebene Restdruck ist, was durch die Druckmeßeinrichtungen (26 und 27) der Elektronik angezeigt wird, schaltet die Elektronik (23) die Ventile (11, 12 und 13) in Arbeitsstellung. Das Ventil (6) bleibt in der Grundstellung. Die Luftfedern (3 und 4) werden über die Leitungen (9, 14 bzw. 10, 15 und 19, 20) in die Atmosphäre entlüftet. Sobald die Druckmeßrichtungen (26 und 27) der Elektronik (23) einen vorgegebenen Restdruck in den Luftfedern (3 und 4) melden, verhindert die Elektronik (23) eine weitere Entlüftung, indem die Ventile (11 und 12) in die Sperrstellung (Grundstellung) geschaltet werden. Bei Bedarf könnte die Schleppachse jetzt automatisch angehoben werden, indem die Elektronik (23) das Ventil (22) veranlaßt, eine Schaltstellung einzunehmen, bei der die Hebeluftfeder (5) mit der Druckmittelquelle (16) verbunden ist. Durch Auffüllen der Hebluftfeder (5) mit Luft würde dann die Schleppachse angehoben werden, bis die Druckmeßeinrichtung (28) der Elektronik (23) einen vorgegebenen, maximalen Luftdruck anzeigt. Die zuvor entlüfteten Luftfedern (3 und 4) werden dabei zusammengedrückt. Die Wegmeßeinrichtungen (24 und 25) zeigen der Elektronik (23) das erreichte Niveau der Fahrzeugzelle an.

Sollte der Abstand zwischen der Fahrzeugzelle und der Achse noch über dem Normalniveau liegen, veranlaßt die Elektronik (23) ein Entlüften der Luftfedern (1 und 2), indem die Ventile (6, 11 und 12) in die Arbeitsstellung geschaltet werden. Die Luftfedern (1 und 2) werden dann solange über die Leitungen (7, 14 bzw. 8, 15 und 19, 20) in die Atmosphäre entlüftet, bis die Wegmeßeinrichtungen (24 und 25) der Elektronik (23) das erreichte Normalniveau der Fahrzeugzelle anzeigen.

Während des Entladevorganges wird das Ventil (6), in Abhängigkeit der von den Wegmeßeinrichtungen (24 und 25) gemessenen Absenkung der Fahrzeugzelle, im Wechselspiel auf die Luftfedern (3, 4 und 1, 2) umgeschaltet, wodurch über die Druckmeßeinrichtungen (26 und 27) eine Kontrolle und Korrektur der Drücke in den Luftfedern der Treib- und Schleppachse erfolgt. Dies geschieht, weil Druckänderungen in der einen Achse automatisch Druckänderungen in der anderen Achse bewirken. Während der Kontrollphase sind die Ventile (11 und 12) in Grundstellung geschaltet, damit eine Messung des statischen Druckes der Luftfedern möglich ist.

Der bei der Be- oder Entladung des Fahrzeuges erfolgte Steuervorgang der Luftfedereinrichtung wird dadurch beendet, daß die Elektronik (23) die Stromzufuhr zu den Vorsteuermagneten aller Ventile unterbricht, wodurch die Ventile die Grundstellung einnehmen. Dies geschieht auch, wenn die Elektronik (23), z. B. durch Ausschaltung der Zündung, stromlos gemacht wird. Die jeweilige Luftverteilung in der Luftfedereinrichtung wird dann aufrechterhalten, so daß eine Be- oder Entlüftung der Hebeluftfeder (5) und damit ein Heben oder Senken der Schleppachse nicht erfolgen kann.

Das automatische Absenken der Schleppachse, d. h. die Betätigung des Ventils (22), erfolgt nur, wenn die nach Art eines Tachometers geschaltete Meßeinrichtung (29) der Elektronik (23) die Fahrgeschwindigkeit 0 bzw. eine noch meßbare minimale Fahrgeschwindigkeit anzeigt, da davon ausgegangen wird, daß ein Beladen nur bei stehendem Fahrzeug vorgenommen wird. Dadurch wird verhindert, daß bei einer Teilbeladung und während der Fahrt die Schleppachse unnötig automatisch gesenkt wird, weil die Meßeinrichtungen dynamisch bedingte Druck/Wegdaten registrieren, wie sie z. B. bei kurzzeitigen Einfederungen oder bei Kurvenfahrten entstehen.

Bei einer einseitigen Be- oder Entladung zeigen die Wegmeßeinrichtungen (24 und 25) für jede Fahrzeugseite ein unterschiedliches Niveau an. Die Druckmeßeinrichtungen (26 und 27) signalisieren unterschiedliche Drücke in den Luftfedern beider Fahrzeugseiten. Die Ventile (11 und 12) reagieren dann nicht gleichzeitig, wodurch die Fahrzeugzelle wieder in eine achsparallele Lage geschwenkt wird.

Das Anheben der Schleppachse, z. B. zur Verringerung des Reifenverschleißes, kann manuell durch Betätigen der Schalterkombination (30) erfolgen, indem die Hebeluftfeder (5) bis zu einem maximal zulässigen Druck belüftet wird, die Luftfedern (3 und 4) der Schleppachse bis zu einem Druck, der gleich oder kleiner einem vorgegebenen Restdruck ist, entlüftet werden und die Luftfedern (1 und 2) der Treibachse zur Aufrechterhaltung des vorgegebenen Abstandes der Fahrzeugzelle von einer Achse belüftet werden. Dies kann jedoch nur geschehen, wenn vor dem Betätigen der Schalterkombination (30) die Luftfedern (3 und 4) der Schleppachse einen Druck aufweisen, der gleich oder größer als der vorgegebene Restdruck ist und wenn durch das Anheben der Schleppachse der Luftdruck in den Luftfedern (1 und 2) der Treibachse den für den Fahrbetrieb maximal zulässigen Druck nicht überschreitet.

Mit der Schalterkombination (30) kann die Schleppachse, zur Verbesserung der Fahrstabilität, auch manuell abgesenkt werden. Dies geschieht dadurch, daß die Hebeluftfeder (5) bis auf einen vorgegebenen Restdruck entlüftet wird, die Luftfedern (3 und 4) der Schleppachse bis zu einem vorgegebenen Restdruck belüftet werden und das Niveau der Fahrzeugzelle durch Entlüften der Luftfedern (1 und 2) der Treibachse wieder hergestellt wird.

**Patentanspruch**

1. Luftfedereinrichtung für Fahrzeuge mit wenigstens einer Treibachse (AT) und wenigstens einer Schleppachse (AS) sowie mit Niveauregelung und Regelung der Achsbelastung, die folgende Merkmale aufweist :

a) Die Treibachse und die Schleppachse sind jeweils durch Luftfedern (1, 2, 3, 4) gegenüber einer Fahrzeugzelle abgefedert ;

b) es sind Wegmeßeinrichtungen (24, 25) vorgesehen, die den Abstand zwischen der Fahrzeugzelle und einer Achse des Fahrzeugs, insbesondere der Treibachse, messen ;

c) es ist wenigstens eine Druckmeßeinrichtung (26, 27) vorgesehen, die den Druck in mindestens einer Luftfeder der Treibachse mißt ;

d) es sind von den Weg- und Druckmeßeinrichtungen steuerbare Ventile (6, 11, 12, 13) vorgesehen, über die die Luftfedern der Treibachse und der Schleppachse mit einer Druckmittelquelle des Fahrzeugs oder mit der Atmosphäre verbindbar sind ;

e) der Schleppachse ist wenigstens eine Hebeluftfeder (5), zugeordnet, die zum Senken der Schleppachse in die Fahrstellung über eine Ventileinrichtung der Hebeluftfeder mit der Atmosphäre verbindbar ist ;

f) es ist eine elektrische Schalteinrichtung vorgesehen, mit der die Ventileinrichtung der Hebeluftfeder automatisch in die die Hebeluftfeder mit der Atmosphäre verbindende Schaltstellung schaltbar ist, wenn der Luftdruck in den Luftfedern der Treibachse einen vorgegebenen maximalen zulässigen Wert erreicht oder überschritten hat ;

gekennzeichnet durch folgende Merkmale :

h) Zur Beeinflussung der elektrischen Schalteinrichtung ist eine Meßeinrichtung (29) vorgesehen, die die Fahrgeschwindigkeit des Fahrzeuges mißt ;

i) die Hebeluftfeder (5) wird durch die Ventileinrichtung (22) der Hebeluftfeder (5) automatisch mit der Atmosphäre verbunden, wenn die Schleppachse angehoben ist, der Luftdruck in den Luftfedern (1 und 2) der Treibachse einen zulässigen maximalen Wert erreicht oder überschritten hat und die Meßeinrichtung (29) der elektrischen Schalteinrichtung die Fahrgeschwindigkeit 0 bzw. eine noch meßbare minimale Fahrgeschwindigkeit des Fahrzeuges signalisiert hat.

**Claim**

1. A pneumatic spring device for vehicles with at least one driving axle (AT) and at least one non-driven axle (AS) and with a level controlling facility and a control facility for the axle load, which device has the following features :

a) the driving axle and the non-driven axle are in each case spring-mounted by pneumatic springs (1, 2, 3, 4) with respect to a vehicle body ;

b) there are provided position tranducers (24, 25) which measure the distance between the vehicle body and an axle of the vehicle, particularly the driving axle ;

c) there is provided at least one pressure-measuring device (26, 27) which measures the pressure in at least one pneumatic spring of the driving axle ;

d) there are provided valves (6, 11, 12, 13) controllable by the position transducers and pressure-measuring devices, via which valves the pneumatic springs of the driving axle and of the non-driven axle can be connected to a pressure medium source of the vehicle or to the atmosphere ;

e) the non-driven axle is assigned at least one lifting pneumatic spring (5) which, to lower the non-driven axle into the travel position, can be connected to the atmosphere by way of a valve device of the lifting pneumatic spring ;

f) there is provided an electrical switching arrangement with which the valve device of the lifting pneumatic spring is automatically switchable into the position connecting the lifting pneumatic spring to the atmosphere whenever the air pressure in the pneumatic springs of the driving axle has reached or exceeded a preset maximum admissible value ;

characterized by the following features :

h) to influence the electrical switching arrangement there is provided a measuring device (29) which measures the speed at which the vehicle is travelling ;

i) the lifting pneumatic spring (5) is automatically connected to the atmosphere by the valve device (22) of the lifting pneumatic spring (5) whenever the non-driven axle is raised, the air pressure in the pneumatic springs (1 and 2) of the driving axle has reached or exceeded a maximum admissible value and the measuring device (29) of the electrical switching arrangement has signalled the travelling speed 0 or a still measurable minimum travelling speed of the vehicle.

**Revendication**

1. Dispositif de ressorts pneumatiques pour véhicules avec au moins un essieu moteur (AT) et au moins un essieu non moteur (AS) ainsi qu'avec régulation de niveau et régulation de la charge d'essieu, présentant les caractéristiques suivantes :

a) l'essieu moteur et l'essieu non moteur sont suspendus chacun par des ressorts pneumatiques (1, 2, 3, 4) par rapport à une caisse de véhicule ;

b) il est prévu des dispositifs de mesure de position (24, 25) qui mesurent la distance entre la caisse du véhicule et un essieu du véhicule, notamment l'essieu moteur ;

c) il est prévu au moins un dispositif de mesure de pression (26, 27) qui mesure la pression dans au moins un ressort pneumatique de l'essieu moteur ;

d) il est prévu des valves (6, 11, 12, 13) pouvant être commandées par les dispositifs de mesure de position et de pression, par lesquelles les ressorts pneumatiques de l'essieu moteur et de l'essieu non moteur peuvent être reliés à une source fluide de pression du véhicule ou à l'atmosphère ;

e) au moins un ressort pneumatique de soulèvement (5) est associé à l'essieu non moteur et, pour abaisser celui-ci à la position de marche, peut être relié à l'atmosphère par un dispositif de valve du ressort pneumatique de soulèvement ;

f) il est prévu un dispositif de commande électrique avec lequel le dispositif de valve du ressort pneumatique de soulèvement peut être automatiquement mis à la position reliant à l'atmosphère le ressort pneumatique de soulèvement, lorsque la pression d'air dans les ressorts pneumatiques de l'essieu moteur a atteint ou dépassé une valeur maximale admissible prédéterminée ;

Caractérisé par les caractéristiques suivantes :

h) pour influencer le dispositif de commande électrique, il est prévu un dispositif de mesure (29) qui mesure la vitesse de déplacement du véhicule ;

i) le ressort pneumatique de soulèvement (5) est automatiquement relié à l'atmosphère par le dispositif de valve (22) du ressort pneumatique de soulèvement (5), lorsque l'essieu non moteur est soulevé, la pression d'air dans les ressorts pneumatiques (1 et 2) de l'essieu moteur a atteint ou dépassé une valeur maximale admissible et le dispositif de mesure (29) a signalé au dispositif de commande électrique une vitesse de déplacement nulle ou bien une vitesse de déplacement minimale, encore mesurable, du véhicule.